# EUROPÄISCHE PATENTSCHRIFT

(11) **EP 2 656 581 B1**
(45) Veröffentlichungstag und Bekanntmachung des Hinweises auf die Patenterteilung: **04.09.2019**
(21) Anmeldenummer: 12715009.2
(22) Anmeldetag: 03.04.2012
(51) Int. Cl.: H04L 29/06

(54) **NETZKOPPELVORRICHTUNG UND ÜBERTRAGUNGSVERFAHREN FÜR PAKETBASIERTE DATENNETZWERKE IN PROZESSLEITSYSTEMEN ODER BETRIEBSLEITSYSTEMEN**
NETWORK COUPLING DEVICE AND TRANSMISSION METHOD FOR PACKET-BASED DATA NETWORKS IN PROCESS CONTROL SYSTEMS OR OPERATIONS CONTROL SYSTEMS
DISPOSITIF DE COUPLAGE RÉSEAU ET PROCÉDÉ DE TRANSMISSION POUR RÉSEAUX DE DONNÉES PAR PAQUETS DANS DES SYSTÈMES DE COMMANDE DE PROCESSUS OU DES SYSTÈMES DE CONTRÔLE/COMMANDE DE L'EXPLOITATION

(30) Priorität: 14.04.2011 DE 102011007387
(43) Veröffentlichungstag der Anmeldung: 30.10.2013
(73) Patentinhaber: Siemens Mobility GmbH, 81739 München (DE)
(72) Erfinder: FALK, Rainer, 85586 Poing (DE); FRIES, Steffen, 85598 Baldham (DE); SATTLER, Carsten, 39114 Magdeburg (DE); SEIFERT, Matthias, 38126 Braunschweig (DE)
(86) Internationale Anmeldenummer: PCT/EP2012/056026
(87) Internationale Veröffentlichungsnummer: WO 2012/139924

(56) Entgegenhaltungen:
- EP-B1- 1 682 952
- US-A- 5 751 952
- US-A1- 2003 145 104
- US-A1- 2008 168 559

## Beschreibung

Die vorliegende Erfindung bezieht sich auf das Gebiet der Prozessleittechnik und der Betriebsleittechnik, insbesondere auf Netzkoppelvorrichtungen und Übertragungsverfahren für paketbasierte Felddatennetzwerke in Prozessleitsystemen oder Betriebsleitsystemen.

Es existieren heute eine Vielzahl von Gebieten, in denen es notwendig ist, komplexe Vorgänge und Prozesse zu regeln. Diese Gebiete können zum Beispiel Verfahrenstechnik, Verkehrstechnik, Automatisierungstechnik sowie Fertigungstechnik oder andere technische Gebiete sein. In allen diesen technischen Gebieten kommen Anlagen zum Einsatz, welche aus einer Vielzahl von Sensoren, Aktoren und Steuereinrichtungen bestehen. Dabei dient die Leittechnik dazu, die Steuerung und Überwachung dieser komplexen Systeme zu ermöglichen. In der Leittechnik werden Anlagen üblicherweise in verschiedene Ebenen unterteilt. Von besonderer Bedeutung sind dabei die Feldebene, welche beispielsweise Aktoren und Sensoren beinhaltet, sowie die Leitebene, welche häufig durch einen Leitstand realisiert wird. In einfachen technischen Anlagen befindet sich der Leitstand in örtlicher Nähe zu der Feldebene. Der Leitstand ist üblicherweise direkt über ein Datennetzwerk mit der Feldebene verbunden. In komplexen und räumlich ausgedehnten Anlagen wird die Feldebene zu einem eigenen Netzwerk zusammengefasst und beispielsweise über ein Gateway mit dem Leitstand verbunden.

Dabei ermöglichen die Gateways eine Kommunikation zwischen zwei unterschiedlichen Netzwerken. Im Fall der Leittechnik ermöglichen sie insbesondere die Kommunikation zwischen dem Netzwerk der Feldebene und dem Leitstand. Zwischen dem Gateway der Feldebene und dem Leitstand können dabei noch weitere Netzwerke, zum Beispiel öffentliche Netzwerke wie das Internet, liegen. Dies ermöglicht es einerseits, den Leitstand örtlich entfernt von der Feldebene vorzusehen, andererseits erfordert dies eine sichere Verbindung zwischen dem Gateway der Feldebene und dem Leitstand.

Aus der EP 1 682 952 B1 ist ein Verfahren zur Wartung von Feldgeräten mit einem Wartungsrechner des Geräteherstellers bekannt, wobei ein Relaisserver in einem öffentlichen Netzwerk zeitlich befristet ein Feldebenen-Netzwerk mit einem Leitebenen-Netzwerk koppelt, sodass ein Wartungsrechner aus dem Leitebenen-Netzwerk eine Peer-to-Peer-Verbindung zu einem Feldgerät in dem Feldebenen-Netzwerk eingehen kann.

Würde die Verbindung zwischen dem Leitstand und dem Gateway der Feldebene ungesichert über öffentliche Netzwerke durchgeführt, könnten Fehler bei der Datenübertragung über das öffentliche Netzwerk sowie böswillige Angreifer die Daten verfälschen und in die Steuerung der Sensoren und Aktoren der Feldebene eingreifen.

Aus diesem Grund können die Gateways zum Beispiel eine Anpassung bzw. Umsetzung von Protokoll-Nachrichten durchführen. Diese Anpassung bzw. Umsetzung von Protokoll-Nachrichten kann in dem Verschlüsseln von bestimmten Protokollnachrichten sowie in dem Absichern von Protokoll-Nachrichten durch Prüfsummen oder dergleichen bestehen.

Eine Anwendung eines solchen Gateways liegt zum Beispiel in der Steuerung der Betriebsleittechnik im Schienenverkehr. Dabei ist es üblich, dass das Leitwerk örtlich weit entfernt von der eigentlichen Feldebene liegt. Um eine sichere Datenübertragung zwischen dem Leitstand und den Sensoren bzw. Aktoren der Feldebene zu gewährleisten, wird zur Datenkommunikation zwischen dem Leitstand und dem Gateway der Feldebene eine paketbasierte Datenübertragung z.B. basierend auf IP und IPSEC durchgeführt. Ferner wird zur Kommunikation zwischen den einzelnen Sensoren bzw. Aktoren und dem Leitstand beispielsweise Profisafe als Übertragungsprotokoll für sicher heitskritische Daten verwendet. Im Rahmen dieser Patentanmeldung wird der Begriff "sicherheitskritisch" verwendet, wie der englische Begriff "safety critical". Das bedeutet, dass eine sicherheitskritische Anwendung eine Anwendung darstellt, welche eine Gefahr für Leib und Leben verursachen kann, falls ein Fehler in der Anlage auftritt. Dies ist zum Beispiel im Schienenverkehr bei der Steuerung für Signallichter der Fall.

In heutigen Gateways werden zur Absicherung der Kommunikation neben den oben genannten Sicherheitsfunktionen ferner sogenannte Netzwerk-Intrusion-Detection-Systeme eingesetzt, welche einen Angriff auf eine Netzwerkkomponente detektieren. Dabei können diese Netzwerk-Intrusion-Detection-Systeme bekannte Angriffsmuster detektieren, welche zum Beispiel eine Abweichung von einem definierten Soll-Netzwerk-Kommunikationsverhalten darstellen. Allgemein sind auch Watchdog-Schaltungen bekannt, welche einen Rechner und/oder die darauf laufende Software überwachen und bei einem Stillstand des Systems das System durch ein Reset-Signal neu starten.

Trotz der oben genannten Sicherheitsvorkehrung ist es nicht ausgeschlossen, dass in einem Gateway aufgrund eines Softwareproblems oder aufgrund eines Eindringens eines Angreifers von außen in das Gateway ein unvorhergesehenes oder nicht gewünschtes Verhalten des Gateways auftritt.

Zum Beispiel könnte es vorkommen, dass ein Gateway eigenständig Netzwerk-Nachrichten erzeugt und versendet. Das eigenständige Senden von Nachrichten durch das Gateway führt üblicherweise nicht zu Problemen, da die Verbindung zu den einzelnen Komponenten der Feldebene durch ein für sicherheitskritische Anwendungen konzipiertes Protokoll wie zum Beispiel Profisafe geschützt wird. Allerdings ist es wünschenswert, ein fehlerhaftes oder ein durch einen Angreifer beeinflusstes Gateway erkennen zu können und eventuell den Fehler beseitigen zu können.

Es ist daher die Aufgabe der vorliegenden Erfindung, eine Möglichkeit zum Betreiben eines Gateways mit hoher Zuverlässigkeit bereitzustellen.

Erfindungsgemäß wird diese Aufgabe durch eine Netzkoppelvorrichtung mit den Merkmalen des Patentanspruchs 1 und ein Übertragungsverfahren mit den Merkmalen des Patentanspruchs 12 gelöst.

Demgemäß ist vorgesehen:
- eine Netzkoppelvorrichtung mit den Merkmalen des Patentanspruchs 1; und
- ein Übertragungsverfahren für ein paketbasiertes Felddatennetzwerk, mit den Merkmalen des Patentanspruchs 11.

Die der vorliegenden Erfindung zugrunde liegende Erkenntnis besteht darin, dass bei einem fehlerfrei arbeitenden Gateway zu bestimmten ausgesendeten Datenpaket ein korrespondierendes Datenpaket empfangen werden muss, bevor das auszusendende Datenpaket gesendet wird.

Die der vorliegenden Erfindung zugrunde liegende Idee besteht nun darin, dieser Erkenntnis Rechnung zu tragen und eine Netzkoppelvorrichtung vorzusehen, welche eine Überwachungseinrichtung aufweist, welche eine Buchhaltung über die Anzahl ausgehender und eingehender Datenpakete in der Übertragungseinrichtung der Netzkoppelvorrichtung durchführt. Eine solche Überwachungseinrichtung überprüft zu jedem ausgesendeten Datenpaket, welches die Überwachungseinrichtung auf einer der Kommunikationsschnittstellen der Netzkoppelvorrichtung erkennt, ob zuvor ein korrespondierendes Datenpaket über eine andere Kommunikationsschnittstelle der Netzkoppelvorrichtung empfangen wurde.

Durch den Einsatz einer solchen Überwachungseinrichtung wird es möglich, zu erkennen, ob die Netzkoppelvorrichtung ordnungsgemäß arbeitet und nur Datenpakete aussendet, zu welchen sie vorher ein korrespondierendes Datenpaket empfangen hat. Dadurch ist sicherzustellen, dass Datenpakete nicht aus dem "Nichts" entstehen. Sollte dies dennoch erkannt werden, deutet dies auf einen Fehler oder eine Beeinflussung der Netzkoppelvorrichtung hin.

Vorteilhafte Ausgestaltungen und Weiterbildungen ergeben sich aus den weiteren Unteransprüchen sowie aus der Beschreibung unter Bezugnahme auf die Figuren der Zeichnung.

In einer vorteilhaften Ausführungsform identifiziert die Überwachungseinrichtung basierend auf einer zeitlichen Abhängigkeit ein korrespondierendes Datenpaket. Die Zuordnung eines ausgesendeten Datenpakets zu einem vorher empfangenen Datenpaket basierend auf einer zeitlichen Abhängigkeit ermöglicht eine schnelle und einfache Zuordnung von eingehenden zu ausgesendeten Datenpaketen. In dem Gateway kann zum Beispiel für jedes eintreffende Datenpaket festgelegt werden, nach wie vielen Sekunden ein Datenpaket ausgesendet werden muss. Beispielsweise können hierfür 5 Sekunden, insbesondere auch Zeiten kleiner 1 Sekunde oder kleiner 100 Millisekunden, insbesondere aber auch Zeiten kleiner 10 Millisekunden oder kleiner 1 Millisekunde vorgegeben werden.

In einer weiteren vorteilhaften Ausführungsform identifiziert die Überwachungseinrichtung basierend auf einem Dateninhalt eines Paketheaders ein korrespondierendes Datenpaket. Der Dateninhalt eines Paketheaders weist detaillierte Informationen zu den einzelnen Datenpaketen auf. Daher ermöglicht der Vergleich von Dateninhalten eines Paketheaders eines ausgesendeten Datenpakets mit dem Inhalt eines Paketheaders eines empfangenen Datenpakets eine exakte Zuordnung des eingehenden zu dem ausgesendeten Datenpaket. Die von der Überwachungseinrichtung zu vergleichenden Dateninhalte eines Paketheaders können zum Beispiel Versionsinformationen, Paketgrößeninformationen, Adressen oder dergleichen aufweisen.

In noch einer weiteren vorteilhaften Ausführungsform identifiziert die Überwachungseinrichtung basierend auf einer Absenderadresse und/oder einer Empfängeradresse ein korrespondierendes Datenpaket. Üblicherweise sendet das Leitwerk einer Anlage Datenpakete zu einzelnen Komponenten der Anlage. Daher ist basierend auf der Absender- und der Empfängeradresse eines Datenpakets eine genaue Zuordnung von eingehenden zu ausgesendeten Datenpaketen des Gateways möglich. Die Absender und/oder Empfängeradressen können dabei IP-Absender bzw. - Empfängeradressen, aber auch Absender- und Empfängeradressen anderer Protokolle sein.

In einer weiteren vorteilhaften Ausführungsform identifiziert die Überwachungseinrichtung basierend auf Nutzdaten ein korrespondierendes Datenpaket. Da das Leitwerk den einzelnen Sensoren oder Aktoren einer automatisierungstechnischen Anlage üblicherweise unterschiedliche Daten übermittelt, ist eine Identifizierung der eingehenden und von dem Gateway ausgesendeten Datenpakete anhand der Nutzdaten effizient durchzuführen. Dabei können die Nutzdaten unverschlüsselt oder verschlüsselt übertragen werden. Werden von dem Gateway verschlüsselte Nutzdaten empfangen und unverändert als verschlüsselte Nutzdaten ausgesendet, so ist es einfach möglich die verschlüsselten Nutzdaten zu vergleichen, ohne diese zu entschlüsseln. Wird dagegen von dem Gateway ein Datenpaket mit verschlüsselten Nutzdaten empfangen, welche das Gateway z.B. auf dem Feldbus unverschlüsselt aussendet, so muss die Überwachungseinrichtung die Entschlüsselung des Datenpakets ebenfalls durchführen, um die Paketinhalte vergleichen zu können.

In einer weiteren vorteilhaften Ausführungsform weist zumindest eine der Kommunikationsschnittstellen eine Ethernet-Schnittstelle, Profibus-Schnittstelle, eine Mobiltelefon-Schnittstelle, eine UMTS-Schnittstelle, eine WLAN-Schnittstelle, eine LTE-Schnittstelle, eine CAN-Schnittstelle, eine Flexray-Schnittstelle, eine HART-Kommunikationsschnittstelle, eine weitere Feldbus-Schnittstelle oder eine SPI-Schnittstelle bzw. eine I²C-Schnittstelle auf. Der Einsatz unterschiedlicher Kommunikationsschnittstellen, welche heute üblicherweise in automatisierungstechnischen Anlagen sowohl auf der Feldebene als auch auf der Ebene des Leitstandes eingesetzt werden, ermöglicht einen flexiblen Einsatz der Netzkoppelvorrichtung in unterschiedlichsten Anwendungen und Einsatzgebieten.

In noch einer weiteren vorteilhaften Ausführungsform ist die Überwachungseinrichtung derart ausgebildet, die Übertragungseinrichtung erneut zu starten oder abzuschalten, falls zu einer festlegbaren Anzahl über eine Kommunikationsschnittstelle der Netzkoppelvorrichtung ausgesendeter Datenpakete kein korrespondierendes Datenpaket über eine andere Kommunikationsschnittstelle der Netzkoppelvorrichtung empfangen wurde. Da der Programmcode, welchen das Gateway ausführt, in einem nicht wieder beschreibbaren Flashspeicher abgelegt ist, und dieser Programmcode beim Hochfahren der Netzkoppelvorrichtung in einen RAM-Speicher geladen wird, von welchem aus dieser Code ausgeführt wird, führt ein Neustart der Netzkoppelvorrichtung dazu, dass der ursprünglich in den Flashspeicher geschriebene Programmcode erneut in das RAM geladen wird. Dadurch können Veränderungen, welche durch ein fehlerhaftes RAM oder durch einen Eindringling von außen an dem Programmcode in dem RAM-Speicher durchgeführt wurden, rückgängig gemacht werden. Gestaltet man ferner die Anzahl der Fehler in der Datenkommunikation der Netzkoppelvorrichtung, welche zu einem Neustart der Netzkoppelvorrichtung führt, flexibel, so wird es möglich, die Netzkoppelvorrichtung an unterschiedliche Anforderungen anzupassen. Die Anzahl der tolerierbaren Datenpakete, welche von einer Kommunikationsschnittstelle der Netzkoppelvorrichtung ausgesendet werden, zu welchen keine korrespondierenden Datenpakete empfangen wurden, kann in sehr kritischen Anwendungen zum Beispiel gleich 1 gesetzt werden, in anderen Anwendungen kann diese Anzahl aber auch höher zum Beispiel auf 5, 10 oder 20 gesetzt werden.

In einer weiteren vorteilhaften Ausführungsform weist die Überwachungseinrichtung eine Warnkommunikationsschnittstelle auf und ist derart ausgebildet, ein Warnsignal über die Warnkommunikationsschnittstelle auszugeben, falls zu einer festlegbaren Anzahl über eine Kommunikationsschnittstelle der Netzkoppelvorrichtung ausgesendeter Datenpakete kein korrespondierendes Datenpaket über eine andere Kommunikationsschnittstelle der Netzkoppelvorrichtung empfangen wurde. Wird in der Überwachungseinrichtung eine Warnkommunikationsschnittstelle vorgesehen, kann die Überwachungseinrichtung über diese Warnkommunikationsschnittstelle zum Beispiel den Betreiber eines Leitstandes, welcher mit dem Gateway über ein öffentliches Datennetzwerk gekoppelt ist, über das Auftreten eines Fehlverhaltens in dem Gateway informieren. Dadurch wird es für den Betreiber des Leitstandes möglich, Abhilfemaßnahmen vorzusehen. Die Warnkommunikationsschnittstelle der Überwachungseinrichtung kann dabei ebenfalls über ein paketbasiertes Datennetzwerk realisiert werden. In weiteren Ausführungsformen kann die Warnkommunikationsschnittstelle der Überwachungseinrichtung aber auch eine Mobiltelefon-Schnittstelle, beispielsweise eine UMTS-Schnittstelle oder LTE-Schnittstelle aufweisen. In noch weiteren Ausführungsformen kann die Warnkommunikationsschnittstelle in Form einer auditiven oder visuellen Anzeige an der Netzkoppelvorrichtung ausgeführt sein. Dies kann zum Beispiel mittels Lautsprecher oder graphischer Displays erfolgen.

In einer weiteren vorteilhaften Ausführungsform ist die Überwachungseinrichtung als ein rekonfigurierbarer Logikbaustein, FPGA, ein Mikroprozessor, ein anwendungsspezifischer Schaltkreis oder eine programmierbare Rechnereinrichtung ausgebildet. Dies ermöglicht einen effizienten Aufbau der Überwachungseinrichtung und damit auch eine effiziente und einfache Integration der Überwachungseinrichtung in die Netzkoppelvorrichtung.

In einer weiteren vorteilhaften Ausführungsform ist die Überwachungseinrichtung als ein Computerprogrammprodukt ausgebildet, welches in der Übertragungseinrichtung vorgesehen ist. Wird die Überwachungseinrichtung als ein Computerprogrammprodukt vorgesehen, kann diese leicht in vorhandene Übertragungseinrichtungen integriert werden. Ferner ist es einfach, ein Computerprogrammprodukt auf eine andere Hardwarearchitektur zu portieren, sollte die Überwachungseinrichtung auf unterschiedlichen Übertragungseinrichtungen zum Einsatz kommen. Dabei kann die Überwachungseinrichtung in einer prozeduralen Programmiersprache wie zum Beispiel C oder in objektorientierten Programmiersprachen wie zum Beispiel Java oder C++ implementiert werden.

In einer weiteren vorteilhaften Ausführungsform ist in der Netzkoppelvorrichtung ein Sockel oder eine Verbindungseinrichtung vorgesehen, wobei die Überwachungseinrichtung auf einer separaten Platine vorgesehen ist, welche in dem Sockel einsetzbar ist oder mit der Verbindungseinrichtung koppelbar ist. Wird die Überwachungseinrichtung auf einer separaten Platine vorgesehen, ist ein einfacher und flexibler Austausch dieser Platine und damit der Überwachungseinrichtung in einer Netzkoppelvorrichtung möglich. Dies ist insbesondere von Vorteil, wenn die Überwachungseinrichtung aus Sicherheitsgründen in einem Halbleiterbaustein realisiert ist, welcher nur ein einziges Mal konfiguriert oder programmiert werden kann. Wäre ein solcher Baustein fest in einer Netzwerkkoppelvorrichtung integriert oder z.B. verlötet, so wäre ein Austausch dieses Bausteins nur schwer möglich. Eine separate Platine, welche die Überwachungseinrichtung beinhaltet, ist jedoch jederzeit leicht austauschbar.

In weiteren Ausführungsformen weist die Überwachungseinrichtung jeweils eine Schnittstelle zu den Kommunikationsschnittstellen der Netzkoppelvorrichtung auf, um die Kommunikationsschnittstellen der Netzkoppelvorrichtung abzuschalten. Dies ermöglicht es, eine Netzkoppelvorrichtung zu deaktivieren, auch wenn die Übertragungseinrichtung nicht auf Abschaltbefehle reagiert. In solch einem Fall würde die Übertragungseinrichtung weiterhin Datenpakete ausgeben, allerdings würden die Kommunikationsschnittstellen diese Datenpakete nicht weiterleiten.

Die Überwachungseinrichtung kann gemeinsam mit der Übertragungseinrichtung in einem Gehäuse integriert werden. In solch einem Fall kann die Überwachungseinrichtung die Datenkommunikation der Übertragungseinrichtung zwischen den Kommunikationsschnittstellen und der Datenübertragungseinrichtung erfassen. In einer weiteren Ausführungsform kann die Überwachungseinrichtung die Kommunikation der Übertragungseinrichtung auch zwischen den Kommunikationsschnittstellen und dem jeweiligen Netzwerk erfassen. Erfasst die Überwachungseinrichtung die Datenkommunikation in der Übertragungseinrichtung zwischen der Übertragungseinrichtung und den Kommunikationsschnittstellen, so weist die Überwachungseinrichtung eine Schnittstelle auf, welche derart ausgebildet ist, diese Kommunikation zu erfassen. Dies ist üblicherweise eine SPI-Schnittstelle oder eine I²C-Schnittstelle. Zur Datenkommunikation zwischen der Übertragungseinrichtung und den Kommunikationsschnittstellen können auch andere Schnittstellen eingesetzt werden. Dies können zum Beispiel parallele oder serielle digitale Datenverbindungen sein. Erfasst die Überwachungseinrichtung den Netzwerkverkehr der Übertragungseinrichtung zwischen den Kommunikationsschnittstellen der Netzkoppelvorrichtung und den eigentlichen Netzwerken, so weist die Überwachungsvorrichtung Koppelelemente auf, welche es der Überwachungseinrichtung ermöglichen, den Netzwerkverkehr der Datennetzwerke direkt zu erfassen. Dies kann zum Beispiel eine Ethernet-Schnittstelle, eine Profibus-Schnittstelle, eine Glasfaser-Schnittstelle oder dergleichen sein. Eine Überwachungseinrichtung kann in einem eigenen Gehäuse vorgesehen sein, welches z.B. Ethernet-Anschlüsse aufweist, um die Überwachungseinrichtung mit einem Switch oder einem Router verbinden zu können, an welchem die Netzkoppelvorrichtung angeschlossen ist.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht die explizit genannte Kombination von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockschaltbild einer Ausführungsform einer erfindungsgemäßen Netzkoppelvorrichtung;
- Fig. 2: ein Ablaufdiagramm einer Ausführungsform eines erfindungsgemäßen Übertragungsverfahrens;
- Fig. 3: eine Ausführungsform einer erfindungsgemäßen Netzkoppelvorrichtung, welche mit einem Feldbus und einem Leitwerk gekoppelt ist.

In den Figuren der Zeichnungen sind gleiche und funktionsgleiche Elemente, Merkmale und Komponenten - sofern nichts anderes aufgeführt ist - jeweils mit denselben Bezugszeichen versehen.

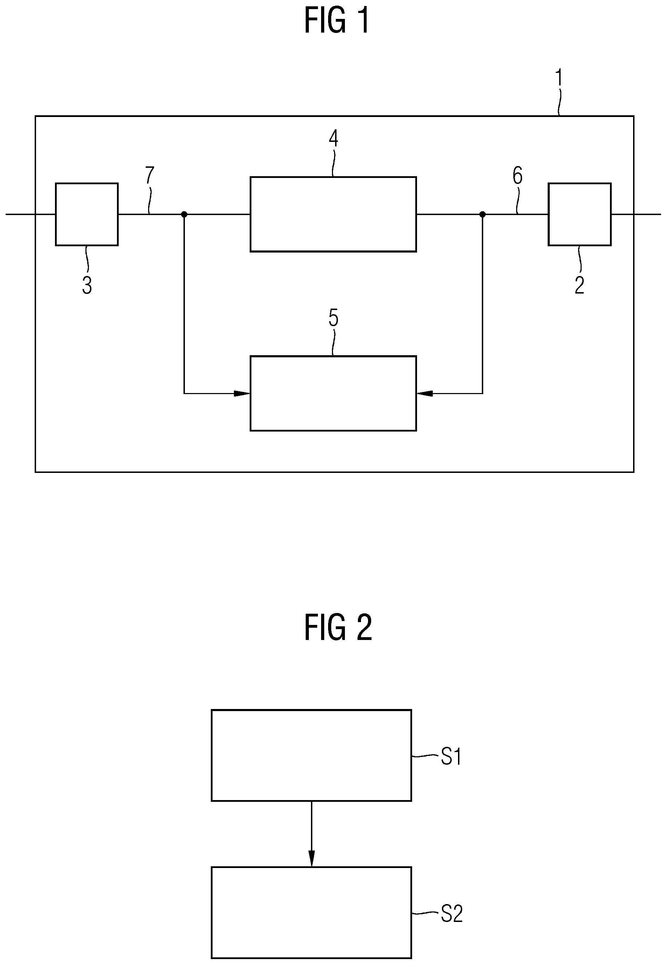

Fig. 1 zeigt ein Blockdiagramm einer Ausführungsform einer erfindungsgemäßen Netzkoppelvorrichtung 1.

Dabei ist in Fig. 1 mit dem Bezugszeichen 1 eine Netzkoppelvorrichtung dargestellt, welche zwei Kommunikationsschnittstellen 2 und 3 aufweist, welche jeweils mit einer Übertragungseinrichtung 4 gekoppelt sind. Ferner weist die Netzkoppelvorrichtung 1 in Fig. 1 eine Überwachungseinrichtung 5 auf. Die Überwachungseinrichtung 5 ist mit der Datenübermittlungsleitung 6 gekoppelt, welche die Kommunikationsschnittstelle 2 mit der Übertragungseinrichtung 4 verbindet. Ferner ist die Überwachungseinrichtung 5 mit der Datenübermittlungsleitung 7 gekoppelt, welche die Kommunikationsschnittstelle 3 mit der Übertragungseinrichtung 4 verbindet.

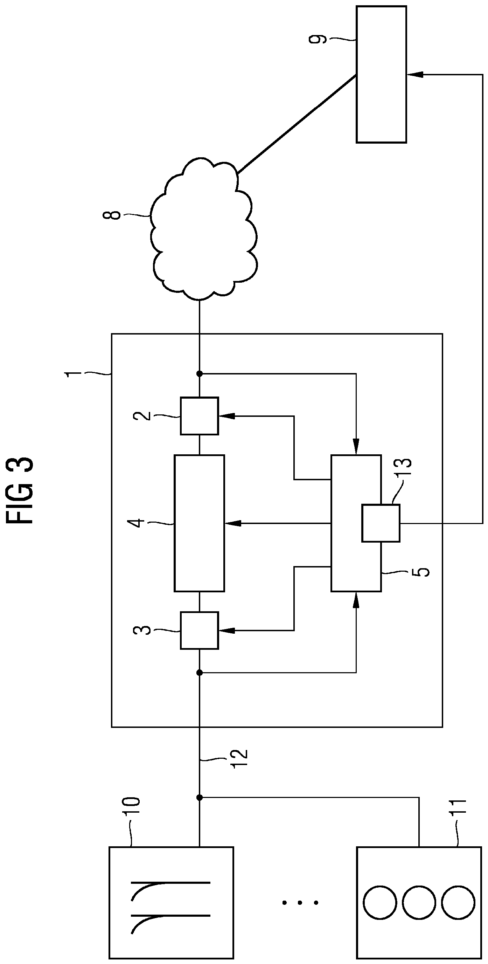

Die Netzkoppelvorrichtung 1 in Fig. 1 ist in einem Schaltschrank untergebracht, welcher z.B. auf einem Bahnhofsbetriebsgelände aufgestellt ist. Die Kommunikationsschnittstelle 2 verbindet die Netzkoppelvorrichtung 1 über eine Ethernet-Verbindung mit einem öffentlichen Datennetzwerk, insbesondere dem Internet 8, wie in Fig. 3 dargestellt. Die Kommunikationsschnittstelle 3 verbindet die Netzkoppelvorrichtung 1 beispielsweise mit einem Felddatennetzwerk 12 eines Bahnhofs, welches auf Profibus basiert. In weiteren Ausführungsformen kann die Kommunikationsschnittstelle 2 die Netzkoppelvorrichtung 1 beispielsweise über eine WLAN-Verbindung, eine UMTS-Verbindung, eine LTE-Verbindung oder eine andere Datenverbindung mit dem Internet 8 verbinden. Die Kommunikationsschnittstelle 3 kann anstatt einer Profibus-Schnittstelle ebenfalls eine Ethernet-Schnittstelle, aber auch eine CAN-Busschnittstelle, eine Flexray-Schnittstelle, eine LIN-Schnittstelle, eine RS232-Schnittstelle, eine Funkschnittstelle, zum Beispiel eine ZigBee-Schnittstelle, eine Bluetooth-Schnittstelle, eine NFC-Schnittstelle oder eine WLAN-Schnittstelle, sein.

Die Übertragungseinrichtung 4 in Fig. 1 ist ein Computer bzw. Rechner mit einem x86-Prozessor, welcher als Betriebssystem z.B. ein Linux-basiertes Betriebssystem ausführt. Das Betriebssystem ist dabei vorzugsweise in einem Flash-Speicher gespeichert, welcher nur mit speziellen Werkzeugen beschreibbar ist. Wird die Übertragungseinrichtung 4 eingeschaltet, so lädt die Übertragungseinrichtung 4 das Betriebssystem aus dem Flash-Speicher in einen RAM-Speicher, von welchem aus das Betriebssystem ausgeführt wird. In weiteren Ausführungsformen ist die Übertragungseinrichtung 4 in einem Embedded-Computersystem integriert, welches auf einem ARM-Prozessor basiert und ein Embedded Linux ausführt, welches für derartige ARM-Prozessoren geeignet ist. In weiteren Ausführungsformen ist das Betriebssystem nicht in einem Flash-Speicher, sondern auf einem externen Datenträger, wie zum Beispiel einer CD oder einem nicht beschreibbaren USB-Speicher gespeichert.

Die Datenübermittlungsleitungen 6 und 7 sind Datenübermittlungsleitungen, welche einen SPI-Bus zwischen der Übertragungseinrichtung 4 und den Kommunikationsschnittstellen 2 und 3 ausbilden. In weiteren Ausführungsformen können diese Datenübermittlungsleitungen I²C-Busleitungen oder direkte serielle bzw. parallele digitale Datenübermittlungsleitungen sein.

Die Überwachungseinrichtung 5 in Fig. 1 kann ein FPGA sein, welcher dazu konfiguriert ist, den Datenverkehr auf den Datenübermittlungsleitungen 6 und 7 zu überwachen. Der FPGA 5 ist dabei vorzugsweise auf einer Steckkarte angebracht, welche in einem Sockel der Netzkoppelvorrichtung 1 sitzt.

In weiteren Ausführungsformen ist die Überwachungseinrichtung 5 als Embedded-Computersystem oder als ASIC ausgebildet.

Fig. 2 zeigt ein Ablaufdiagramm einer Ausführungsform eines erfindungsgemäßen Übertragungsverfahrens.

In Fig. 2 werden in einem ersten Schritt S1 Datenpakete durch eine Übertragungseinrichtung 4 einer Netzkoppelvorrichtung 1 übertragen. Dabei werden die Daten über eine Kommunikationsschnittstelle 2, 3 der Netzkoppelvorrichtung 1 empfangen und auf einer anderen Kommunikationsschnittstelle 3, 2 der Netzkoppelvorrichtung 1 ausgesendet. Das Aussenden der Daten bedeutet im Zusammenhang mit der vorliegenden Erfindung, dass die Daten über eine der Kommunikationsschnittstellen 2, 3 der Netzkoppelvorrichtung 1 übertragen werden.

In einem zweiten Schritt S2 wird überwacht, ob zu einem über eine Kommunikationsschnittstelle 2, 3 der Netzkoppelvorrichtung 1 ausgesendeten Datenpaket ein dazu korrespondierendes Datenpaket über eine andere Kommunikationsschnittstelle 3, 2 der Netzkoppelvorrichtung 1 empfangen wurde. Die Übertragungseinrichtung 4 wird durch die Überwachungseinrichtung 5 dahingehend überwacht, ob die Übertragungseinrichtung 4 eigenständig Datenpakete erzeugt und diese über die Kommunikationsschnittstellen 2, 3 überträgt. Da die Übertragungseinrichtung 4 eine Gateway-Funktion hat, darf die Übertragungseinrichtung 4 keine Datenpakete selbstständig erzeugen. Dabei bezieht sich die Überwachung vorzugsweise nur auf eine bestimmte Art von Datenpaketen. Das heißt, auf solche Datenpakete, die ein bestimmtes Kriterium erfüllen. Insbesondere kann sich die Überwachung auf sicherheitskritische Nachrichten beziehen. Solche sicherheitskritischen Nachrichten oder Datenpakete können zum Beispiel Datenpakete des Profisafe-Protokolls sein. So kann die Übertragungseinrichtung 4 eigenständig Pakete, zum Beispiel für ein Managementsystem, zur Fernwartung erzeugen, ohne dass dies als fehlerhaft von der Überwachungseinrichtung 5 erkannt würde. Es können auch andere Safety-Protokolle wie z.B. das Open-Safety-Protokoll, CA-Nopen-Safety-Protokoll, CIP-Safety-Protokoll und/oder das IN-TERBUS-Safety-Protokoll verwendet werden. Auch können Safety-relevante Überwachungsnachrichten bzw. Safety-relevante Steuernachrichten über ein herkömmliches Steuerprotokoll wie z.B. Profinet oder über ein allgemeines Kommunikationsprotokoll wie IP, TCP, UDP, HTTP, RPC, DCOM oder einen Web-Service übertragen werden.

Fig. 3 zeigt ein Blockdiagramm einer Ausführungsform einer erfindungsgemäßen Netzkoppelvorrichtung 1, welche über eine Kommunikationsschnittstelle 2 mit dem Internet 8, und darüber indirekt mit einem Leitwerk 9 gekoppelt ist. Ferner ist die in Fig. 3 dargestellte Netzkoppelvorrichtung 1 über eine Warnkommunikationsschnittstelle 13 der Überwachungseinrichtung 5 mit dem Leitwerk 9 gekoppelt. Über die Kommunikationsschnittstelle 3 ist die Netzkoppelvorrichtung 1 der Fig. 3 mit einem Profibus-Datennetzwerk verbunden, welches das Felddatennetzwerk eines Bahnhofs darstellt. Über dieses Felddatennetzwerk 12 ist die Netzkoppelvorrichtung 1 mit einer Weiche 10 und einem Signal 11 des Bahnhofs gekoppelt.

Die Netzkoppelvorrichtung 1 in Fig. 3 unterscheidet sich von der Netzkoppelvorrichtung 1 aus Fig. 1 dahingehend, dass die Überwachungseinrichtung 5 ferner Verbindungen sowohl zu den Kommunikationsschnittstellen 2 und 3 als auch zu der Übertragungseinrichtung 4 aufweist. Ferner ist die Überwachungseinrichtung 5 nicht mit den Übertragungsleitungen 6 und 7 zwischen den Kommunikationsschnittstellen 2, 3 und der Übertragungseinrichtung 4 verbunden, sondern mit den Verbindungsleitungen, welche die Kommunikationsschnittstellen 2 und 3 mit den jeweiligen Netzwerken 8 und 12 verbinden. Die Verbindungsleitungen zwischen der Überwachungseinrichtung 5 und den Kommunikationsschnittstellen 2 und 3 sowie der Übertragungseinrichtung 4 dienen dazu, diese bei Auftreten eines Fehlers abzuschalten oder neu zu starten. In der in Fig. 3 dargestellten Ausführungsform sind diese Leitungen als einfache digitale Leitungen ausgeführt, welche als Signal eine Null oder eine Eins übertragen können, wobei eine Eins bedeutet, dass das daran angeschlossene Gerät, also die Kommunikationsschnittstellen 2, 3 oder die Übertragungseinrichtung 4 abgeschaltet werden sollen oder einen Neustart durchführen sollen.

In Fig. 3 ist mit Bezugszeichen 8 das Internet in Form einer Wolke dargestellt. Die Netzkoppelvorrichtung 1 kann auch indirekt über weitere Netzwerke mit dem Internet 8 gekoppelt sein. Dabei ist die Netzkoppelvorrichtung 1 nicht notwendigerweise über eine Ethernet-Leitung mit diesen zwischen der Netzkoppelvorrichtung 1 und dem Internet 8 gelagerten Netzwerken verbunden. Beispielsweise kann die Netzkoppelvorrichtung 1 über eine WLAN-Schnittstelle oder über eine UMTS-Schnittstelle mit diesen Netzwerken verbunden sein. Zur sicheren Datenübertragung zwischen dem Leitwerk 9 und der Netzkoppelvorrichtung 1 kann beispielsweise eine auf IPV4 basierende mit IPSEC geschützte Kommunikation stattfinden. In weiteren Ausführungsformen kann aber auch eine auf IPV6 basierende Kommunikation, welche mittels IPSEC oder anderen Absicherungsmechanismen geschützt wird, stattfinden.

Die Kommunikation zwischen der Netzkoppelvorrichtung 1 und dem Felddatennetzwerk 12 des Bahnhofs findet üblicherweise unverschlüsselt statt, da bereits eine Vielzahl von Feldgeräten 10, 11, wie zum Beispiel die Weiche 10 und das Signal 11, in Bahnhöfen eingesetzt sind, welche eine Verschlüsselung der Datenübertragung nicht erlauben. Allerdings kann in weiteren Ausführungsformen auch eine verschlüsselte Datenübertragung auf dem Felddatennetzwerk 12 stattfinden. Insbesondere ist die Netzkoppelvorrichtung 1 derart ausgebildet, dass diese zu bestimmten Feldgeräten 10, 11 eine verschlüsselte Verbindung und zu anderen Feldgeräten 10, 100 eine nicht verschlüsselte Verbindung aufbauen kann. Üblicherweise werden von dem Leitwerk 9 über das Internet 8 Steuerbefehle an die Netzkoppelvorrichtung 1 übertragen, welche diese an die einzelnen Feldgeräte 10, 11 auf dem Felddatennetzwerk 12 überträgt. In entgegengesetzter Richtung übertragen die Feldgeräte 10, 11 über das Felddatennetzwerk 12 Statusmeldungen an die Netzkoppelvorrichtung 1, welche diese über das Internet 8 an das Leitwerk 9 weiterleitet.

In dem in Fig. 3 dargestellten Ausführungsbeispiel identifiziert die Überwachungsvorrichtung 5 die zu einem jeweiligen ausgesendeten Datenpaket gehörenden eintreffenden Datenpakete mittels eines Vergleichs des Zeitpunkts des Eintreffens des empfangenen Datenpakets und des Aussendens des zu sendenden Datenpakets sowie eines Vergleichs von Feldern des Paketheaders, welche zum Beispiel Versionsinformationen, Adressinformationen oder dergleichen aufweisen. In weiteren Ausführungsformen identifiziert die Überwachungsvorrichtung 5 korrespondierende Datenpakete anhand der Größe des empfangenen Pakets und des auszusendenden Pakets. Dabei muss die Größe der Pakete nicht unbedingt gleich sein, sondern kann basierend auf zum Beispiel einer Verschlüsselung durch die Netzkoppelvorrichtung 1 eine bestimmte bekannte Differenz in der Größe aufweisen. In noch einer weiteren Ausführungsform identifiziert die Überwachungsvorrichtung 5 eingehende Datenpakete und auszusendende Datenpakete, welche einander korrespondieren anhand vorgegebener Unterschiede. So muss beispielsweise zu einem bestimmten nicht verschlüsselten eingehenden Datenpaket ein auf eine bestimmte Art und Weise verschlüsseltes auszusendendes Datenpaket erzeugt werden. Dadurch kann auch sichergestellt werden, dass die Netzkoppelvorrichtung 1 bzw. die Übertragungseinrichtung 4 der Netzkoppelvorrichtung 1 vorgesehene Sicherheitsmaßnahmen umsetzt.

In einer beispielhaften Ausführungsform kann die Netzkoppelvorrichtung 1 in anderen Prozessleitsystemen eingesetzt werden, als zum Beispiel einem Bahnhofssystem. Insbesondere kann die Netzkoppelvorrichtung 1 in jeder Art von automatisierungstechnischer Prozessanlage eingesetzt werden, welche die Steuerung unterschiedlicher Aktoren und Sensoren durch ein Leitwerk erfordert. Beispiele für solche prozessleittechnischen Anlagen können Verkehrsleitanlagen, Kraftwerksanlagen, Automatisierungsanlagen in Produktionsstätten, Bordnetzwerke von Zügen, Schiffen oder Flugzeugen, Heimautomatisierungsnetzwerke oder beispielsweise Netzwerke von medizintechnischen Geräten innerhalb von Krankenhäusern, welche in einem Leitstand gesteuert werden sollen, sein.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Netzkoppelvorrichtung (1) für ein paketbasiertes Feldebenen-Datennetzwerk, mit:
mindestens zwei Kommunikationsschnittstellen (2, 3), welche jeweils mit einem Datennetzwerk (8, 12) koppelbar sind; und
einer integrierten Übertragungseinrichtung (4), welche mit den Kommunikationsschnittstellen (2, 3) der Netzkoppelvorrichtung (1) gekoppelt und derart ausgebildet ist, Datenpakete zwischen den Kommunikationsschnittstellen (2, 3) zu übertragen, wobei die Netzkoppelvorrichtung (1) eine Überwachungseinrichtung (5) aufweist, welche mit den Kommunikationsschnittstellen (2, 3) der Netzkoppelvorrichtung (1) gekoppelt ist, wobei die Überwachungseinrichtung (1) derart ausgebildet ist, zu überwachen, ob zu einem über eine Kommunikationsschnittstelle (2, 3) der Netzkoppelvorrichtung (1) ausgesendetem Datenpaket ein dazu korrespondierendes Datenpaket über eine andere Kommunikationsschnittstelle (3, 2) der Netzkoppelvorrichtung (1) empfangen wurde; **dadurch gekennzeichnet, dass** überwacht wird, ob die Übertragungseinrichtung (4) das über die Kommunikationsschnittstelle (2,3) übertragene Datenpaket eigenständig erzeugt hat, wobei
die Überwachungseinrichtung (5) eine Warnkommunikationsschnittstelle (13) aufweist und derart ausgebildet ist, ein Warnsignal über die Warnkommunikationsschnittstelle (13) auszugeben, falls zu einer festlegbaren Anzahl über eine Kommunikationsschnittstelle (2, 3) der Netzkoppelvorrichtung (1) ausgesendeter Datenpakete kein korrespondierendes Datenpaket über eine andere Kommunikationsschnittstelle (3, 2) der Netzkoppelvorrichtung (1) empfangen wurde.

2. Netzkoppelvorrichtung nach Anspruch 1,
**dadurch gekennzeichnet,**
**dass** die Überwachungseinrichtung (5) basierend auf einer zeitlichen Abhängigkeit ein korrespondierendes Datenpaket identifiziert.

3. Netzkoppelvorrichtung nach mindestens einem der Ansprüche 1 und 2,
**dadurch gekennzeichnet,**
**dass** die Überwachungseinrichtung (5) basierend auf einem Dateninhalt eines Paketheaders ein korrespondierendes Datenpaket identifiziert.

4. Netzkoppelvorrichtung nach mindestens einem der Ansprüche 1 bis 3,
**dadurch gekennzeichnet,**
**dass** die Überwachungseinrichtung (5) basierend auf einer Absenderadresse und/oder einer Empfängeradresse ein korrespondierendes Datenpaket identifiziert.

5. Netzkoppelvorrichtung nach mindestens einem der Ansprüche 1 bis 4,
**dadurch gekennzeichnet,**
**dass** die Überwachungseinrichtung (5) basierend auf Nutzdaten ein korrespondierendes Datenpaket identifiziert.

6. Netzkoppelvorrichtung nach mindestens einem der Ansprüche 1 bis 5,
**dadurch gekennzeichnet,**
**dass** zumindest eine der Kommunikationsschnittstellen (2, 3) eine Ethernet-Schnittstelle, eine Profibus-Schnittstelle, eine Mobiltelefon-Schnittstelle, eine UMTS-Schnittstelle, eine WLAN-Schnittstelle, eine LTE-Schnittstelle, eine CAN-Schnittstelle, eine FlexRay-Schnittstelle, eine HART-Kommunikationsschnittstelle, eine weitere Feldbus-Schnittstelle oder eine SPI-Schnittstelle bzw. eine I²C-Schnittstelle aufweist.

7. Netzkoppelvorrichtung nach mindestens einem der Ansprüche 1 bis 6,
**dadurch gekennzeichnet,**
**dass** die Überwachungseinrichtung (5) derart ausgebildet ist, die Übertragungseinrichtung (4) neu zu starten oder abzuschalten, falls zu einer festlegbaren Anzahl über eine Kommunikationsschnittstelle (2, 3) der Netzkoppelvorrichtung (1) ausgesendeter Datenpakete kein korrespondierendes Datenpaket über eine andere Kommunikationsschnittstelle (3, 2) der Netzkoppelvorrichtung (1) empfangen wurde.

8. Netzkoppelvorrichtung nach mindestens einem der Ansprüche 1 bis 7,
**dadurch gekennzeichnet,**
**dass** die Überwachungseinrichtung (5) als ein rekonfigurierbarer Logikbaustein, ein FPGA, ein Mikroprozessor oder eine programmierbare Recheneinrichtung ausgebildet ist.

9. Netzkoppelvorrichtung nach mindestens einem der Ansprüche 1 bis 8,
**dadurch gekennzeichnet,**
**dass** die Überwachungseinrichtung (5) als ein Softwareprogrammprodukt ausgebildet ist, welches in der Übertragungseinrichtung (4) vorgesehen ist.

10. Netzkoppelvorrichtung nach mindestens einem der Ansprüche 1 bis 9,
mit einem Sockel oder einer Verbindungseinrichtung;
wobei die Überwachungseinrichtung (5) auf einer separaten Platine vorgesehen ist, welche in den Sockel einsetzbar ist oder mit der Verbindungseinrichtung koppelbar ist.

11. Übertragungsverfahren für ein paketbasiertes Feldebenen-Datennetzwerk, mit dem Schritt:
Übertragen (S1) von Datenpaketen durch eine Übertragungseinrichtung (4) einer Netzkoppelvorrichtung (1), welche über eine Kommunikationsschnittstelle (2, 3) der Netzkoppelvorrichtung (1) empfangen werden und über eine andere Kommunikationsschnittstelle (3, 2) der Netzkoppelvorrichtung (1) ausgesendet werden, umfassend den **den Schritt:**
Überwachen (S2), ob zu einem über eine Kommunikationsschnittstelle (2, 3) der Netzkoppelvorrichtung (1) ausgesendetem Datenpaket ein dazu korrespondierendes Datenpaket über eine andere Kommunikationsschnittstelle (3, 2) der Netzkoppelvorrichtung (1) empfangen wurde, **dadurch gekennzeichnet, dass** überwacht wird, ob die Übertragungseinrichtung (4) das über die Kommunikationsschnittstelle (2,3) übertragene Datenpaket eigenständig erzeugt hat, und
Absenden eines Warnsignals, falls zu einer festlegbaren Anzahl über eine Kommunikationsschnittstelle (2, 3) der Netzkoppelvorrichtung (1) ausgesendeter Datenpakete kein korrespondierendes Datenpaket über eine andere Kommunikationsschnittstelle (3, 2) der Netzkoppelvorrichtung (1) empfangen wurde.

12. Übertragungsverfahren nach Anspruch 11,
wobei das Überwachen für zumindest eine Auswahl an Datenpaketen
das Identifizieren eines korrespondierenden Datenpakets basierend auf einer zeitlichen Abhängigkeit aufweist; und/oder
das Identifizieren eines korrespondierenden Datenpakets basierend auf einem Dateninhalt eines Paketheaders aufweist; und/oder
das Identifizieren eines korrespondierenden Datenpakets basierend auf einer Absenderadresse und/oder einer Empfängeradresse aufweist; und/oder
das Identifizieren eines korrespondierenden Datenpakets basierend auf Nutzdaten aufweist.

13. Übertragungsverfahren nach mindestens einem der Ansprüche 11 und 12, bei dem
die Übertragungseinrichtung (4) der Netzkoppelvorrichtung (1) erneut startet oder abschaltet, falls zu einer festlegbaren Anzahl über eine Kommunikationsschnittstelle (2, 3) der Netzkoppelvorrichtung (1) ausgesendeter Datenpakete kein korrespondierendes Datenpaket über eine andere Kommunikationsschnittstelle (3, 2) der Netzkoppelvorrichtung (1) empfangen wurde.

## Claims

1. Network coupling apparatus (1) for a packet-based field-level data network, having:
at least two communication interfaces (2, 3) that are each couplable to a data network (8, 12); and
an integrated transmission device (4) that is coupled to the communication interfaces (2, 3) of the network coupling apparatus (1) and designed to transmit data packets between the communication interfaces (2, 3),
wherein the network coupling apparatus (1) has a monitoring device (5) coupled to the communication interfaces (2, 3) of the network coupling apparatus (1), wherein the monitoring device (1) is designed to monitor whether a data packet transmitted via a communication interface (2, 3) of the network coupling apparatus (1) has had a corresponding data packet received for it via another communication interface (3, 2) of the network coupling apparatus (1); **characterized in that** monitoring is performed to ascertain whether the transmission device (4) has produced the data packet transmitted via the communication interface (2, 3) independently, wherein the monitoring device (5) has a warning communication interface (13) and is designed to output a warning signal via the warning communication interface (13) if a stipulable number of data packets transmitted via a communication interface (2, 3) of the network coupling apparatus (1) have not had a corresponding data packet received for them via another communication interface (3, 2) of the network coupling apparatus (1).

2. Network coupling apparatus according to Claim 1,
**characterized**
**in that** the monitoring device (5) identifies a corresponding data packet on the basis of a temporal dependency.

3. Network coupling apparatus according to at least either of Claims 1 and 2,
**characterized**
**in that** the monitoring device (5) identifies a corresponding data packet on the basis of a data content of a packet header.

4. Network coupling apparatus according to at least one of Claims 1 to 3,
**characterized**
**in that** the monitoring device (5) identifies a corresponding data packet on the basis of a sender address and/or a receiver address.

5. Network coupling apparatus according to at least one of Claims 1 to 4,
**characterized**
**in that** the monitoring device (5) identifies a corresponding data packet on the basis of useful data.

6. Network coupling apparatus according to at least one of Claims 1 to 5,
**characterized**
**in that** at least one of the communication interfaces (2, 3) has an Ethernet interface, a Profibus interface, a mobile phone interface, a UMTS interface, a WLAN interface, an LTE interface, a CAN interface, a FlexRay interface, a HART communication interface, a further fieldbus interface or an SPI interface or an I²C interface.

7. Network coupling apparatus according to at least one of Claims 1 to 6,
**characterized**
**in that** the monitoring device (5) is designed to restart or shut down the transmission device (4) if a stipulable number of data packets transmitted via a communication interface (2, 3) of the network coupling apparatus (1) have not had a corresponding data packet received for them via another communication interface (3, 2) of the network coupling apparatus (1).

8. Network coupling apparatus according to at least one of Claims 1 to 7,
**characterized**
**in that** the monitoring device (5) is in the form of a reconfigurable logic chip, an FPGA, a microprocessor or a programmable computing device.

9. Network coupling apparatus according to at least one of Claims 1 to 8,
**characterized**
**in that** the monitoring device (5) is in the form of a software program product provided in the transmission device (4).

10. Network coupling apparatus according to at least one of Claims 1 to 9,
having a base or a connecting device;
wherein the monitoring device (5) is provided on a separate circuit board, which is insertable into the base or is couplable to the connecting device.

11. Transmission method for a packet-based field-level data network, having the step of:
transmitting (S1) data packets by means of a transmission device (4) of a network coupling apparatus (1), which data packets are received via a communication interface (2, 3) of the network coupling apparatus (1) and are transmitted via another communication interface (3, 2) of the network coupling apparatus (1),
comprising the step of:
monitoring (S2) whether a data packet transmitted via a communication interface (2, 3) of the network coupling apparatus (1) has had a corresponding data packet received for it via another communication interface (3, 2) of the network coupling apparatus (1), **characterized in that**
monitoring is performed to ascertain whether the transmission device (4) has produced the data packet transmitted via the communication interface (2, 3) independently, and
sending a warning signal if a stipulable number of data packets transmitted via a communication interface (2, 3) of the network coupling apparatus (1) have not had a corresponding data packet received for them via another communication interface (3, 2) of the network coupling apparatus (1).

12. Transmission method according to Claim 11,
wherein the monitoring for at least a selection of data packets features the identifying of a corresponding data packet on the basis of a temporal dependency; and/or
features the identifying of a corresponding data packet on the basis of a data content of a packet header; and/or
features the identifying of a corresponding data packet on the basis of a sender address and/or a receiver address; and/or features the identifying of a corresponding data packet on the basis of useful data.

13. Transmission method according to at least either of Claims 11 and 12, in which
the transmission device (4) of the network coupling apparatus (1) restarts or shuts down if a stipulable number of data packets transmitted via a communication interface (2, 3) of the network coupling apparatus (1) have not had a corresponding data packet received for them via another communication interface (3, 2) of the network coupling apparatus (1).

## Revendications

1. Dispositif de couplage réseau (1) pour un réseau de données sur plans de terrains par paquets, comprenant :
au moins deux interfaces de communication (2, 3) qui peuvent être respectivement couplées à un réseau de données (8, 12) ; et un dispositif de transmission (4) intégré qui est couplé aux interfaces de communication (2, 3) du dispositif de couplage réseau (1) et conçu de façon à transmettre des paquets de données entre les interfaces de communication (2, 3),
dans lequel
le dispositif de couplage réseau (1) présente un dispositif de surveillance (5) qui est couplé avec les interfaces de communication (2, 3) du dispositif de couplage réseau (1), dans lequel le dispositif de surveillance (1) est conçu pour surveiller si, pour un paquet de données envoyé par une interface de communication (2, 3) du dispositif de couplage réseau (1), un paquet de données lui correspondant a été reçu par une autre interface de communication (3, 2) du dispositif de couplage réseau (1) ;
**caractérisé en ce qu'**il est surveillé si le dispositif de transmission (4) a produit de manière autonome le paquet de données transféré par le biais de l'interface de communication (2, 3), dans lequel le dispositif de surveillance (5) présente une interface de communication d'avertissement (13) et est conçu pour envoyer un signal d'avertissement par le biais de l'interface de communication d'avertissement (13) si, pour un nombre pouvant être déterminé de paquets de données envoyés par le biais d'une interface de communication (2, 3) du dispositif de couplage réseau (1), aucun paquet de données correspondant n'a été reçu par le biais d'une autre interface de communication (3, 2) du dispositif de couplage réseau (1).

2. Dispositif de couplage réseau selon la revendication 1,
**caractérisé en ce que**
le dispositif de surveillance (5) identifie un paquet de données correspondant en se basant en fonction du temps.

3. Dispositif de couplage réseau selon au moins l'une des revendications 1 et 2,
**caractérisé en ce que**
le dispositif de surveillance (5) identifie un paquet de données correspondant en se basant sur un contenu de données d'un en-tête de paquet.

4. Dispositif de couplage réseau selon au moins l'une des revendications 1 à 3,
**caractérisé en ce que**
le dispositif de surveillance (5) identifie un paquet de données correspondant en se basant sur une adresse d'expéditeur et/ou une adresse de destinataire.

5. Dispositif de couplage réseau selon au moins l'une des revendications 1 à 4,
**caractérisé en ce que**
le dispositif de surveillance (5) identifie un paquet de données correspondant en se basant sur des données utiles.

6. Dispositif de couplage réseau selon au moins l'une des revendications 1 à 5,
**caractérisé en ce qu'**au moins une des interfaces de communication (2, 3) présente une interface Ethernet, une interface Profibus, une interface de téléphone mobile, une interface UMTS, une interface WLAN, une interface LTE, une interface CAN, une interface FlexRay, une interface de communication HART, une autre interface de bus de terrain ou une interface SPI, respectivement une interface I²C.

7. Dispositif de couplage réseau selon au moins l'une des revendications 1 à 6,
**caractérisé en ce que** le dispositif de surveillance (5) est conçu pour démarrer ou arrêter à nouveau le dispositif de transmission (4) si, pour un nombre pouvant être déterminé de paquets de données envoyés par le biais d'une interface de communication (2, 3) du dispositif de couplage réseau (1), aucun paquet de données correspondant n'a été reçu par le biais d'une autre interface de communication (3, 2) du dispositif de couplage réseau (1).

8. Dispositif de couplage réseau selon au moins l'une des revendications 1 à 7,
**caractérisé en ce que** le dispositif de surveillance (5) est conçu en tant qu'un module logique pouvant être configuré, un FPGA, un microprocesseur ou un dispositif de calcul programmable.

9. Dispositif de couplage réseau selon au moins l'une des revendications 1 à 8,
**caractérisé en ce que** le dispositif de surveillance (5) est conçu en tant qu'un produit de programme informatique qui est prévu dans le dispositif de transmission (4).

10. Dispositif de couplage réseau selon au moins l'une des revendications 1 à 9,
comprenant un socle ou un dispositif de liaison ; dans lequel le dispositif de surveillance (5) est prévu sur une platine séparée qui peut être insérée dans le socle ou peut être couplée au dispositif de liaison.

11. Procédé de transmission pour un réseau de données par paquets, comprenant l'étape :
de transmission (S1) de paquets de données par un dispositif de transmission (4) d'un dispositif de couplage réseau (1) qui sont reçus par le biais d'une interface de communication (2, 3) du dispositif de couplage réseau (1) et sont envoyés par une autre interface de communication (3, 2) du dispositif de couplage réseau (1),
comprenant l'étape :
de surveillance (S2) si, pour un paquet de données envoyé par une interface de communication (2, 3) du dispositif de couplage réseau (1), un paquet de données lui correspondant a été reçu par une autre interface de communication (3, 2) du dispositif de couplage réseau (1), **caractérisé en ce qu'**il est surveillé si le dispositif de transmission (4) a produit de manière autonome le paquet de données transféré par le biais de l'interface de communication (2, 3), et d'envoi d'un signal d'avertissement si, pour un nombre pouvant être déterminé de paquets de données envoyés par le biais d'une interface de communication (2, 3) du dispositif de couplage réseau (1), aucun paquet de données correspondant n'a été reçu par le biais d'une autre interface de communication (3, 2) du dispositif de couplage réseau (1).

12. Procédé de transmission selon la revendication 11, dans lequel la surveillance pour au moins une sélection de paquets de données présente l'identification d'un paquet de données correspondant en se basant en fonction du temps ;
et/ou
l'identification d'un paquet de données correspondant en se basant sur un contenu de données d'un en-tête de paquet ; et/ou
l'identification d'un paquet de données correspondant en se basant sur une adresse d'expéditeur et/ou une adresse de destinataire ;
et/ou
l'identification d'un paquet de données correspondant en se basant sur des données utiles.

13. Procédé de transmission selon au moins l'une des revendications 11 et 12, dans lequel
le dispositif de transmission (4) du dispositif de couplage réseau (1) démarre ou s'arrête à nouveau, si, pour un nombre pouvant être déterminé de paquets de données envoyés par le biais d'une interface de communication (2, 3) du dispositif de couplage réseau (1), aucun paquet de données correspondant n'a été reçu par le biais d'une autre interface de communication (3, 2) du dispositif de couplage réseau (1).
